# EUROPEAN PATENT APPLICATION

(11) **EP 4 012 825 A1**
(43) Date of publication of application: **15.06.2022**
(21) Application number: 21758039.8
(22) Date of filing: 29.01.2021
(51) Int. Cl.: H01M 50/10, H01M 50/20, H01M 50/242

(54) **BATTERY AND ELECTRIC DEVICE**

(30) Priority: 14.10.2020 CN 202011097565
(71) Applicant: DONGGUAN POWERAMP TECHNOLOGY LIMITED, Songshan Lake Park Dongguan City Guangdong 523000 (CN)
(72) Inventor: YUAN, Hongwei, Dongguan, Guangdong 523808 (CN); WANG, Shenbo, Dongguan, Guangdong 523808 (CN)
(74) Representative: Icosa
(86) International application number: PCT/CN2021/074499
(87) International publication number: WO 2022/077807

(57) **Abstract**

This application provides a battery, including a housing and a cell assembly disposed inside the housing, and the cell assembly includes a plurality of stacked cell units. The cell assembly further includes a fastening band, a first separator, and a fixing plate. The fastening band is disposed on an exterior surface of the cell assembly and is configured to limit an external expansion volume of the cell assembly. The first separator and the fixing plate are disposed on two opposite side surfaces of the cell assembly along a stacking direction of the cell units and are located on an exterior surface of the fastening band, and the first separator is sandwiched between the fastening band and the fixing plate. The battery uses the fastening band to wrap the cell assembly, and the first separator and the fixing plate are disposed on the exterior surface of the fastening band to limit expansion of the cell units inside the battery. This prevents an external volume of the battery from changing excessively, avoids use of a cell bracket, and reduces costs and weight of the battery. This application further provides an electric apparatus including the battery.

## Description

### TECHNICAL FIELD

This application relates to a battery and an electric apparatus including the battery.

### BACKGROUND

During charging and discharging of a lithium-ion battery, a battery cell may expand. If an overall size of the battery changes excessively because of the expansion, use performance of the battery may be seriously affected. To resolve this problem, a cell bracket is typically disposed in the prior art to limit an external expansion volume of the battery cell. However, use of the cell bracket may increase weight and manufacturing costs of the battery.

### SUMMARY

In view of the foregoing situation, this application provides a battery that can resolve the foregoing problem and an electric apparatus including the battery. Uses a fastening band to wrap a cell assembly, and a first separator and a fixing plate are disposed on an exterior surface of the fastening band to limit expansion of cell units inside the battery. This prevents an external volume of the battery from changing excessively, avoids use of a cell bracket, and reduces costs and weight of the battery.

An embodiment of this application provides a battery, including a housing and a cell assembly disposed inside the housing, where the cell assembly includes a plurality of stacked cell units. The cell assembly further includes a fastening band, a first separator, and a fixing plate. The fastening band is disposed on an exterior surface of the cell assembly and is configured to limit an external expansion volume of the cell assembly. The first separator is disposed on two opposite side surfaces of the cell assembly along a stacking direction of the cell units and is located on an exterior surface of the fastening band, and the first separator is configured to absorb deformation of the fastening band. The fixing plate is disposed on two opposite sides of the cell assembly along the stacking direction and the first separator is sandwiched between the fastening band and the fixing plate.

Further, an edge of the first separator does not exceed an edge of the fixing plate.

Optionally, a side surface of the first separator that faces towards the cell assembly is connected to the fastening band.

Optionally, a second separator is disposed between adjacent cell units and the second separator includes an elastic piece.

Further, the second separator includes a sealing portion, and the sealing portion extends from a side of the cell unit and bends along the stacking direction of the cell unit.

Optionally, the cell assembly includes a first end and a second end that are disposed oppositely, the first end and the second end are not wrapped by the fastening band, tabs of the plurality of cell units extend from the first end, a third separator is disposed between tabs of adjacent cell units, and the second end is covered by a fourth separator.

Further, the battery further includes an adapter plate, and the adapter plate is disposed on the first end of the cell assembly and is electrically connected to the tabs of the cell units.

Further, the adapter plate includes an electrical connection terminal, and the electrical connection terminal extends from the housing.

Optionally, the cell assembly includes two cell bodies, the cell body includes a plurality of stacked cell units, and a bonding piece is disposed on opposite surfaces of the two cell bodies.

Optionally, a length of the sealing portion that extends from the cell units is 0.5 mm to 1 mm.

Optionally, the sealing portion is wrapped by the fastening band.

Optionally, a bonding layer is disposed on a surface of the first separator.

An embodiment of this application further provides an electric apparatus, including a circuit element and the battery according to any one of the foregoing implementations, and the circuit element is electrically connected to the battery.

The battery according to this application uses the fastening band to wrap the cell assembly, and the first separator and the fixing plate are disposed on the exterior surface of the fastening band to absorb deformation of the fastening band and further limit an external expansion volume of the cell assembly to limit expansion of the cell units inside the battery. This prevents an external volume of the battery from changing excessively, avoids use of a cell bracket, and reduces costs and weight of the battery.

### BRIEF DESCRIPTION OF DRAWINGS

FIG. 1 is a stereoscopic structural diagram of a battery in an embodiment.
FIG. 2 is a schematic exploded view of the battery shown in FIG. 1.
FIG. 3 is a schematic exploded view of the battery shown in FIG. 1.
FIG. 4 is a schematic exploded view of a cell body and a fastening band shown in FIG. 3.
FIG. 5 is a stereoscopic structural diagram of the cell body and the fastening band shown in FIG. 4.
FIG. 6 is a rear view of a cell body, shown in FIG. 3, with the fastening band removed.
FIG. 7 is a stereoscopic structural diagram of the cell body shown in FIG. 6.
FIG. 8 is a cross-sectional diagram of the battery shown in FIG. 1.
FIG. 9 is a schematic exploded view of a cell assembly shown in FIG. 2 in an embodiment.
FIG. 10 is a schematic exploded view of a cell assembly shown in FIG. 2 in an embodiment.
FIG. 11 is a schematic exploded view of a cell assembly shown in FIG. 2 in an embodiment.
FIG. 12 is a schematic exploded view of a cell assembly shown in FIG. 2 in an embodiment.
FIG. 13 is a structural block diagram of an electric apparatus in an embodiment.

Reference signs of main components:

| | |
|---|---|
| Battery | 100 |
| Cell assembly | 10 |
| Cell body | 11 |
| Cell unit | 111 |
| Second separator | 112 |
| Sealing portion | 113 |
| First end | 114 |
| Second end | 115 |
| Tab | 116 |
| Third separator | 117 |
| Fourth separator | 118 |
| Fastening band | 12 |
| First separator | 13 |
| Bonding layer | 131 |
| Fixing plate | 14 |
| Bonding piece | 15 |
| Housing | 20 |
| Potting compound | 30 |
| Adapter plate | 40 |
| Electrical connection terminal | 41 |
| Voltage monitor | 42 |
| Temperature monitor | 43 |
| Insulator | 50 |
| Electric apparatus | 200 |
| Circuit element | 201 |

### DESCRIPTION OF EMBODIMENTS

The following clearly and completely describes the technical solutions in the embodiments of this application with reference to the accompanying drawings in the embodiments of this application. Apparently, the described embodiments are only some rather than all of the embodiments of this application.

It should be noted that when an element is referred to as being "fastened" to another element, it may be directly fastened to the another element or an intermediate element may be present. When an element is considered to be "connected" to another element, it may be directly connected to the another element or an intermediate element may be present. When an element is considered to be "disposed" at another element, it may be directly disposed at the another element or an intermediate element may be present. The terms "vertical", "horizontal", "left", "right", and similar expressions used herein are merely for description purposes.

Unless otherwise defined, all technical and scientific terms used herein shall have the same meanings as commonly understood by those skilled in the art to which this application belongs. Herein the terms used in the specification of this application are merely intended to describe specific embodiments but not intended to constitute any limitation on this application. The term "and/or" used herein includes any and all combinations of one or more relevant listed items.

This application provides a battery, including a housing and a cell assembly disposed inside the housing, and the cell assembly includes a plurality of stacked cell units. The cell assembly further includes a fastening band, a first separator, and a fixing plate. The fastening band is disposed on an exterior surface of the cell assembly and is configured to limit an external expansion volume of the cell assembly. The first separator is disposed on two opposite side surfaces of the cell assembly along a stacking direction of the cell units and is located on an exterior surface of the fastening band, and the first separator is configured to absorb deformation of the fastening band. The fixing plate is disposed on two opposite sides of the cell assembly along the stacking direction and the first separator is sandwiched between the fastening band and the fixing plate.

The battery uses the fastening band to wrap a cell body, and the first separator and the fixing plate are disposed on the exterior surface of the fastening band to limit expansion of the cell units inside the battery. This prevents an external volume of the battery from changing excessively, avoids use of a cell bracket, and reduces costs and weight of the battery.

Some embodiments of this application are described in detail. In absence of conflicts, the following embodiments and features in the embodiments may be combined with each other.

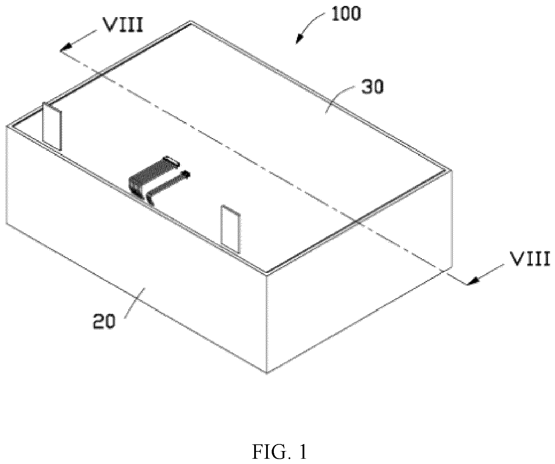

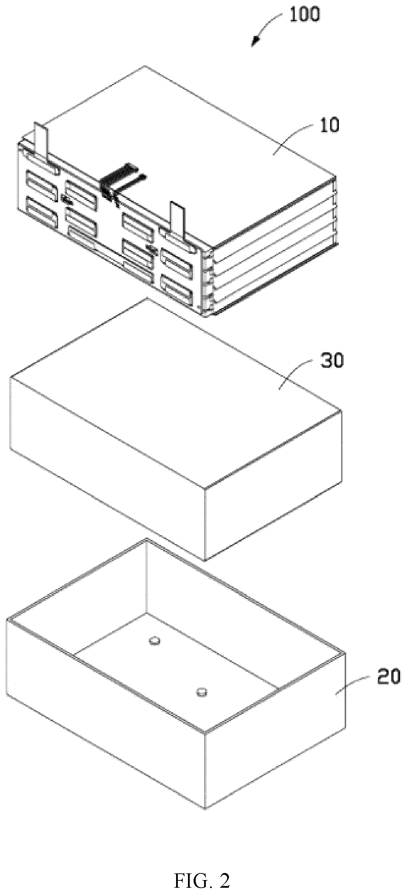

Referring to FIG. 1 and FIG. 2, in an implementation, a battery 100 includes a cell assembly 10 and a battery housing 20. The cell assembly 10 is disposed inside the housing 20. A potting compound 30 is filled between the housing 20 and the cell assembly 10, and the potting compound 30 covers a surface of the cell assembly 10.

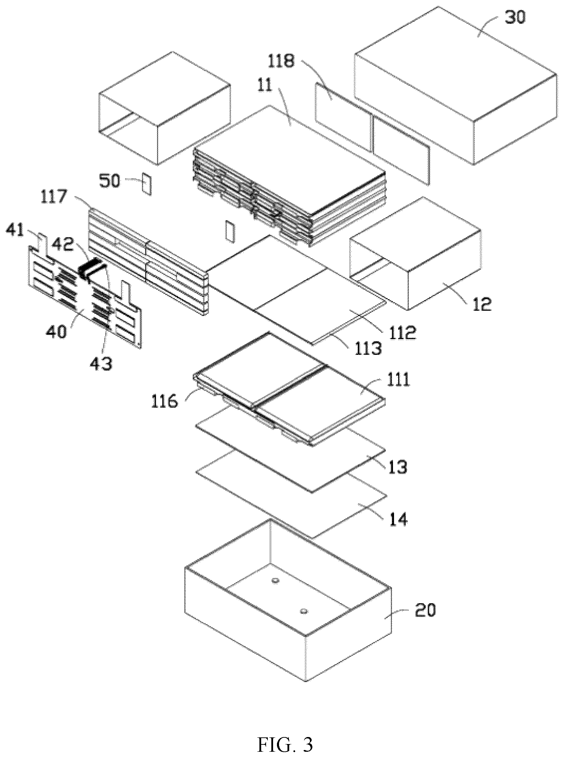

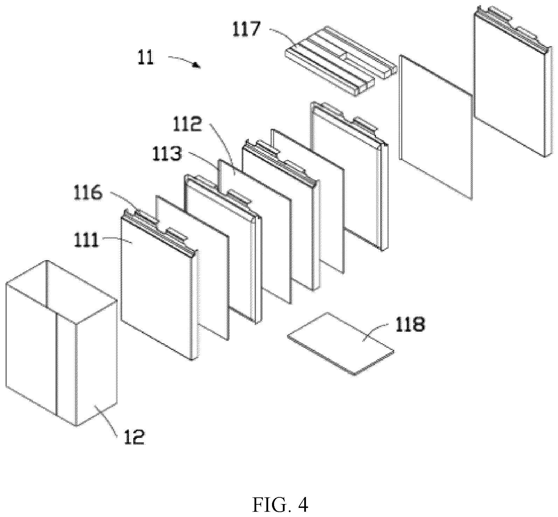

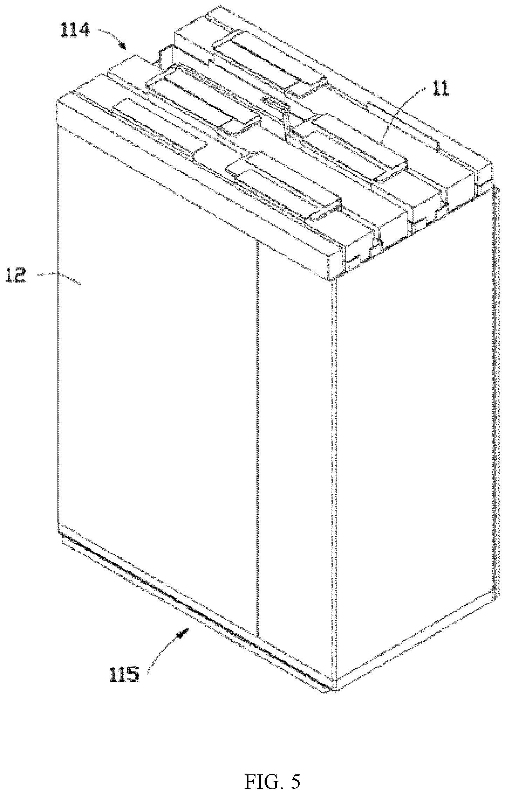

Referring to FIG. 3, FIG. 4, and FIG. 5, the cell assembly 10 includes at least one cell body 11, and the cell body 11 includes a plurality of stacked cell units 111. A second separator 112 is disposed between two adjacent cell units 111 and the second separator 112 includes an elastic piece. The second separator 112 covers a surface of the cell unit 111 and is configured to absorb an expansion volume of the cell unit 111. The cell assembly 10 further includes a fastening band 12. The fastening band 12 wraps an exterior surface of the cell assembly 10 and is configured to limit an external expansion volume of the cell body 11. Specifically, the fastening band 12 wraps a peripheral surface of the cell body 11, to wrap the plurality of stacked cell units 111 inside the fastening band 12, limit a volume change of the cell body 11 along a stacking direction of the cell units 111, and make the second separator 112 fully absorb an expansion volume of the cell units 111. The fastening band 12 includes but is not limited to a wrapping that has some elasticity, such as a fiber tape and an acetate cloth.

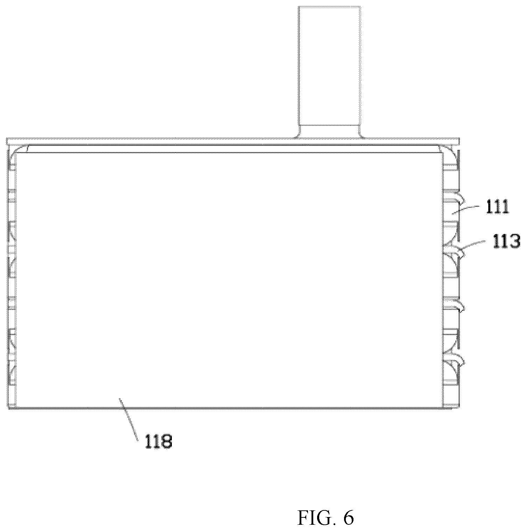

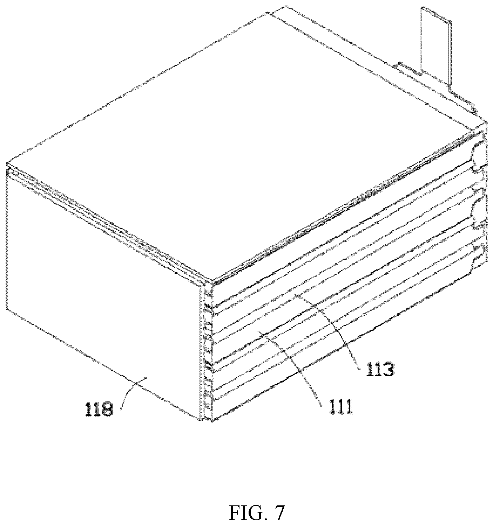

Still referring to FIG. 6 and FIG. 7, the second separator 112 includes a sealing portion 113. The sealing portion 113 extends from a side of the cell unit 111 and bends along the stacking direction of the cell unit 111 to fill an edge clearance between the cell units 111, reducing an impact of the potting compound 30 on clearances between the plurality of cell units 111. Specifically, the sealing portion 113 extends from two opposite sides of the cell assembly 10 that are covered by the fastening band 12. In a perspective of FIG. 3, the sealing portion 113 is located between two adjacent cell units 111 and extends from left and right sides of the cell assembly 10. A plurality of sealing portions 113 bend towards a bottom of the battery housing 20. When the potting compound 30 flows from an opening end of the battery housing 20 to the bottom, the sealing portion 113 may guide a flowing direction of the potting compound 30 to some extent, preventing the potting compound 30 from flowing into a side gap of the cell assembly 10. The sealing portion 113 is wrapped by the fastening band 12 to further prevent the potting compound 30 from coming in contact with the second separator 112, make the second separator 112 effectively absorb an expansion volume of the cell units 111, and prevent an external volume of the cell body 11 from changing excessively.

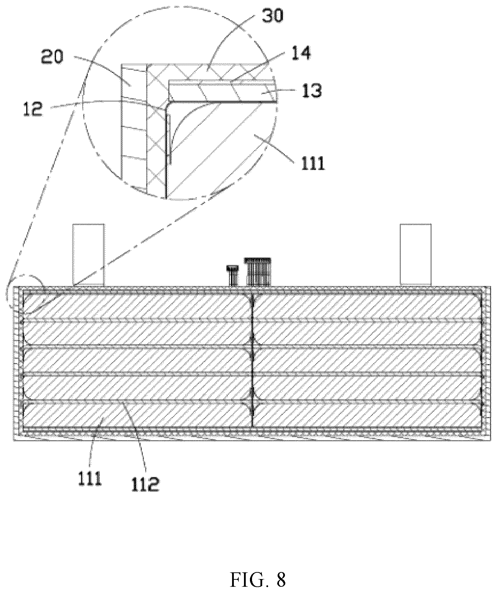

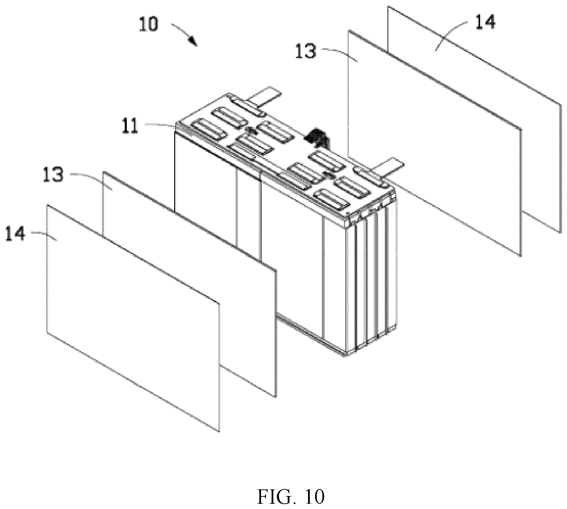

Referring to FIG. 8 and FIG. 10, in an optional embodiment, the cell assembly 10 includes a first separator 13. The first separator 13 is disposed on two opposite side surfaces of the cell assembly 10 along a stacking direction of the cell units 111 and is located on an exterior surface of the fastening band 12. The first separator 13 may be used to absorb deformation of the fastening band 12, further limit an expansion volume of the cell body 11 inside the cell assembly 10, and reduce a change to an external size of the cell assembly 10. The cell assembly 10 further includes a fixing plate 14. The fixing plate is disposed on two opposite sides of the cell assembly 10 along the stacking direction of the cell units 111 and the first separator 13 is sandwiched between the fastening band 12 and the fixing plate 14. The fixing plate 14 is a rigid plate. The first separator 13 includes but is not limited to a material with elasticity, such as foam. Because the fastening band 12 is a flexible material, the fixing plate 14 is a rigid material, and the first separator 13 is disposed between the fastening band 12 and the fixing plate 14 to implement a buffer function, the flexible material is prevented from directly coming in contact with the rigid material. Especially when the fastening band 12 is deformed, the first separator 13 is capable of preventing a damage caused by friction between the fastening band 12 and a surface of the fixing plate 14. The fixing plate 14 is configured to prevent an external sharp object from piercing the first separator 13 and the fastening band 12, and can further press the cell assembly 10 and limit changes to an external size of the cell assembly 10. It can be understood that the fixing plate 14 can further reduce a contact between the first separator 13 and the potting compound 30, so that the first separator 13 can fully absorb deformation of the fastening band 12.

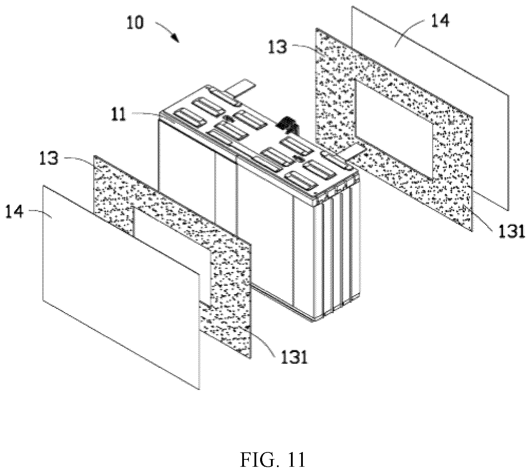

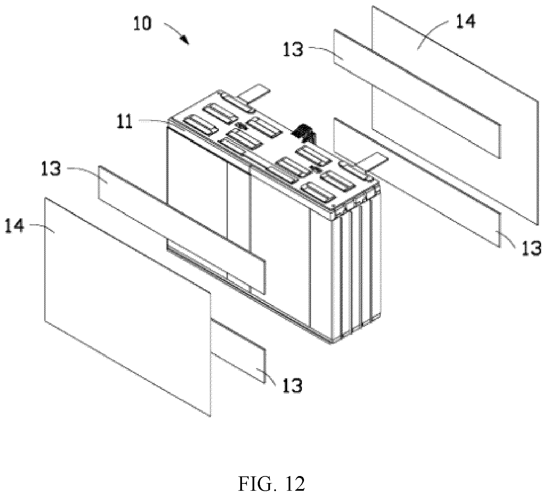

In an embodiment shown in FIG. 10, a first separator 13 covers a side surface of a cell assembly 10 and a fixing plate 14 covers a side surface of the first separator 13 that faces away from the cell assembly 10. Referring to FIG. 11 and FIG. 12, in another embodiment, the first separator 13 may further be circular or stripe-shaped. The first separator 13 is disposed close to an edge of the fixing plate 14, and an edge of the first separator 13 does not exceed the edge of the fixing plate 14. This avoids affecting a size of the cell assembly 10 in a width direction and minimizes a contact between the first separator 13 and a potting compound 30. Because the fixing plate 14 is a rigid material, the first separator 13 is capable of supporting a symmetric area on the fixing plate 14 to prevent a direct contact between the fixing plate 14 and the fastening band 12. A shape of the first separator 13 is not limited in this application. Further, a bonding layer 131 is further disposed on a side surface of the first separator 13 that faces towards the cell assembly 10, and is configured to connect the fastening band 12 and the first separator 13. It can be understood that the bonding layer 131 may be disposed on two opposite side surfaces of the first separator 13 along the stacking direction to separately connect the fastening band 12 and the fixing plate 14. The bonding layer 131 includes but is not limited to a material such as a double-sided adhesive. The bonding layer 131 may be applied on an entire surface of the first separator 13 or may be applied on a part of the surface of the first separator 13 provided that a connection requirement is met. This is not limited in this application.

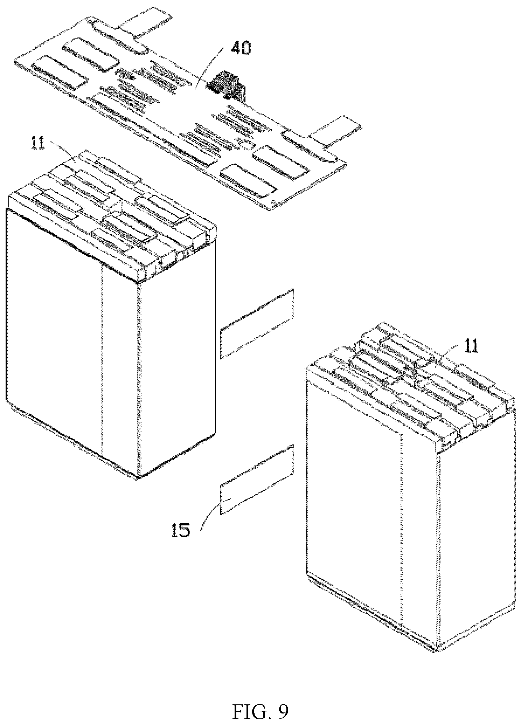

Still referring to FIG. 9, in an embodiment of this application, a cell assembly 10 includes two cell bodies 11, and a bonding piece 15 is disposed on opposite surfaces of the two cell bodies 11 to connect the two cell bodies 11 as a whole. A first separator 13 and a fixing plate 14 simultaneously cover the two cell bodies 11. A sealing portion 113 extends from a side of the cell bodies 11 that faces a potting compound 30. A length of the sealing portion 113 that extends from a cell unit 111 is 0.5 mm to 1 mm. It can be understood that in another embodiment, there may be more than two cell bodies 11. This is not limited in this application.

Referring again to FIG. 3, FIG. 4, and FIG. 5, the cell assembly 10 includes a first end 114 and a second end 115 that are disposed oppositely, the first end 114 and the second end 115 are not covered by the fastening band 12. Tabs 116 of the plurality of cell units 111 extend from the first end 114, a third separator 117 is disposed between tabs 116 of adjacent cell units 111, and the second end 115 is covered by a fourth separator 118. The third separator 117 and the fourth separator 118 are used to absorb an expansion volume of the cell bodies 11 in a length direction and prevent the potting compound 30 from entering a clearance between the cell units 111 from the first end 114 and/or the second end 115. Materials of the second separator 112, the first separator 13, the third separator 117, and the fourth separator 118 include but are not limited to foam.

Further, the battery 100 further includes an adapter plate 40, and the adapter plate 40 is disposed on the first end 114 and is electrically connected to the tabs 116 of the cell units 111. The adapter plate 40 includes an electrical connection terminal 41, and the electrical connection terminal 41 extends from the housing 20 and is configured to connect an external electrical device or element. The battery 100 further includes an insulator 50. The insulator 50 fits onto the electrical connection terminal 41 and is configured to protect the electrical connection terminal 41 and prevent short circuit incidents.

In an embodiment of this application, the adapter plate 40 further includes a voltage monitor 42 and a temperature monitor 43 that are configured to monitor voltage and temperature data of the plurality of cell units 111, to cope with a case such as a short circuit and battering overheating in a timely manner. The voltage monitor 42 and the temperature monitor 43 extend from the housing 20, to connect an external control apparatus.

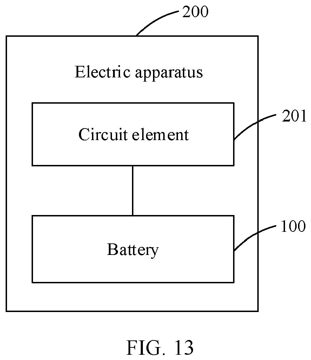

Referring to FIG. 13, an embodiment of this application further provides an electric apparatus 200, including a circuit element 201 and the battery 100 according to any one of the foregoing embodiments or a combination of the embodiments, and the circuit element 201 is electrically connected to the battery 100.

The foregoing embodiments are merely intended to describe the technical solutions of this application, but not intended to constitute any limitation. Although this application is described in detail with reference to example embodiments, persons of ordinary skill in the art should understand that modifications or equivalent replacements can be made to the technical solutions of this application, without departing from the spirit and essence of the technical solutions of this application.

## Claims

1. A battery, comprising:
a cell assembly, wherein the cell assembly comprises a plurality of stacked cell units; and
a housing, wherein the cell assembly is disposed inside the housing;
**characterized in that** the cell assembly further comprises:
a fastening band, disposed on an exterior surface of the cell assembly, wherein the fastening band is configured to limit an external expansion volume of the cell assembly;
a first separator, wherein the first separator is disposed on two opposite side surfaces of the cell assembly along a stacking direction of the cell units and is located on an exterior surface of the fastening band, and the first separator is configured to absorb deformation of the fastening band; and
a fixing plate, wherein the fixing plate is disposed on two opposite sides of the cell assembly along the stacking direction and the first separator is sandwiched between the fastening band and the fixing plate.

2. The battery according to claim 1, **characterized in that** an edge of the first separator does not exceed an edge of the fixing plate.

3. The battery according to claim 1, **characterized in that** a side surface of the first separator facing towards the cell assembly is connected to the fastening band.

4. The battery according to claim 1, **characterized in that** a second separator is disposed between adjacent cell units and the second separator comprises an elastic piece.

5. The battery according to claim 4, **characterized in that** the second separator comprises a sealing portion, and the sealing portion extends from a side of the cell unit and bends along the stacking direction of the cell unit.

6. The battery according to claim 1, **characterized in that** the cell assembly comprises a first end and a second end that are disposed oppositely, the first end and the second end are not wrapped by the fastening band, tabs of the plurality of cell units extend from the first end, a third separator is disposed between tabs of adjacent cell units, and the second end is covered by a fourth separator.

7. The battery according to claim 6, **characterized in that** the battery further comprises an adapter plate, and the adapter plate is disposed on the first end of the cell assembly and is electrically connected to the tabs of the cell units.

8. The battery according to claim 7, **characterized in that** the adapter plate comprises an electrical connection terminal, and the electrical connection terminal extends from the housing.

9. The battery according to claim 1, **characterized in that** the cell assembly comprises two cell bodies, the cell body comprises a plurality of stacked cell units, and a bonding piece is disposed on opposite surfaces of the two cell bodies.

10. The battery according to claim 5, **characterized in that** a length of the sealing portion that extends from the cell units is 0.5 mm to 1 mm.

11. The battery according to claim 5, **characterized in that** the sealing portion is wrapped by the fastening band.

12. The battery according to claim 1, **characterized in that** a bonding layer is disposed on a surface of the first separator.

13. An electric apparatus, **characterized in that** the electric apparatus comprising a circuit element and the battery according to any one of the claims 1 to 12, and the circuit element is electrically connected to the battery.
